# EUROPÄISCHE PATENTANMELDUNG

(11) **EP 4 752 496 A1**
(43) Veröffentlichungstag der Anmeldung: **03.06.2026**
(21) Anmeldenummer: 25214189.0
(22) Anmeldetag: 07.11.2025
(51) Int. Cl.: G01B 5/20

(54) **VERFAHREN ZUR VERMESSUNG DER GEOMETRIE EINER SCHRÄGVERZAHNUNG**

(30) Priorität: 28.11.2024 DE 102024135196
(71) Anmelder: Liebherr-Verzahntechnik GmbH, 87437 Kempten (DE)
(72) Erfinder: GEISER, Hansjoerg, 87437 Kempten (DE); FUNKE, Daniel, 87437 Kempten (DE)
(74) Vertreter: Lorenz Seidler Gossel Part. mbB

(57) **Zusammenfassung**

Die vorliegende Erfindung zeigt ein Verfahren zur Vermessung der Geometrie einer Schrägverzahnung, bei welchem ein Sensor entlang mindestens eines Messpfades über eine Zahnflanke der Verzahnung geführt wird, um die Geometrie der Zahnflanke entlang des Messpfades an einer Mehrzahl von Punkten zu vermessen, wobei sich der Messpfad zumindest in einem Teilbereich schräg über die Zahnflanke erstreckt, so dass er einen Eingriffsbereich auf der Zahnflanke über mindestens 50 % seiner Erstreckung in Profilrichtung und in Flankenlinienrichtung überstreicht.

## Beschreibung

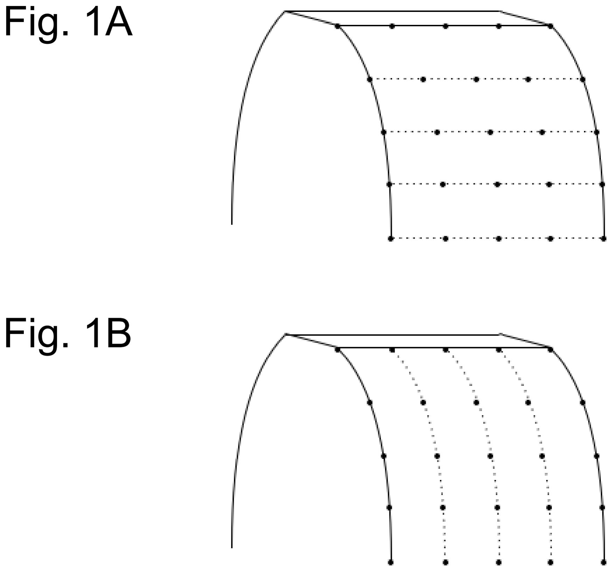

Herkömmliche Verfahren zur Vermessung von Zahnflanken nehmen Messwerte entlang von Flanken- und/oder Profillinien auf, wie dies in Fig. 1a und 1b gezeigt ist.

Eine Flankelinie (Fig. 1A) wird entlang einer Linie von einer Stirnseite des Zahnrads zur anderen Stirnseite gemessen. Diese Linie wird auf einem definierten Durchmesser des Zahnrads aufgenommen. Ein Profil (Fig. 1B) wird entlang einer Linie vom Zahnfuß zum Zahnkopf gemessen. Diese Linie wird auf einer definierten Position der Zahnbreite aufgenommen.

Wie aus Fig. 1A und 1B ersichtlich können auch mehrere Profil- und/oder Flankenlinien gemessen werden. Die Kombination der Messpunkte dieser Linien ergibt die Topografie des Zahnrads, die eine flächenmäßige Auswertung erlaubt.

Es gibt Auswerte-Programme wie die Abweichungsanalyse 6.1D [Abweichungsanalyse 6.1D /8 - Hochschule für angewandte Wissenschaften Hamburg, Department Maschinenbau + Produktion, Institut für Produktionstechnik, www.ggravel.de, 2024], die durch eine Welligkeitsanalyse mittels Ausgleichsinus über die Flankenlinien aller Zähne ein Spektrum der Welligkeitsamplituden ermittelt.

Das Ergebnis kann im Vergleich zu Ergebnissen von Getriebeprüfständen verwendet werden, wie auch zur Beurteilung des Fertigungsprozesses.

Aufgabe der vorliegenden Erfindung ist es, verbesserte Verfahren zur Vermessung und Analyse der Geometrie von Verzahnungen zur Verfügung zu stellen.

Diese Aufgabe wird durch die Verfahren gemäß den unabhängigen Ansprüchen gelöst. Bevorzugte Ausgestaltungen der vorliegenden Erfindung sind Gegenstand der Unteransprüche.

In einem ersten Aspekt umfasst die vorliegende Erfindung ein Verfahren zur Vermessung der Geometrie einer Schrägverzahnung, bei welchem ein Sensor entlang mindestens eines Messpfades über eine Zahnflanke der Verzahnung geführt wird, um die Geometrie der Zahnflanke entlang des Messpfades an einer Mehrzahl von Punkten zu vermessen. Der Messpfad erstreckt sich hierbei erfindungsgemäß zumindest in einem Teilbereich schräg über die Zahnflanke, so dass er einen Eingriffsbereich auf der Zahnflanke über mindestens 50 % seiner Erstreckung in Profilrichtung und in Flankenlinienrichtung überstreicht.

Die Erfinder der vorliegenden Erfindung haben erkannt, dass die Betrachtung von Profil- und/oder Flankenlinien, wie sie gemäß dem Stand der Technik durchgeführt wurden, nur für Geradverzahnungen zu verlässlichen Ergebnissen führt, da bei einer Geradverzahnung die gemessenen Flankenlinien den Berührlinien im Getriebeeingriff mit dem Gegenrad und die Profilinien dem Kontaktpfad von Berührlinienpunkt zu Berührlinienpunkt entsprechen.

Bei einer Schrägverzahnung laufen die Berührlinien im Gegensatz zur Geradverzahnung jedoch schräg über die Zahnflanke - sie verlaufen umso steiler, je größer der Schrägungswinkel ist. Die Erfinder der vorliegenden Erfindung haben hierbei erkannt, dass der Unterschied von Flankenlinien / Profillinien zu den realen Eingriffsverhältnissen zu einer Mehrdeutigkeit bzw. unterschiedlicher Interpretierbarkeit der Ergebnisse führt, da eben nicht die realen Eingriffsbedingungen der Verzahnung mit einem Gegenrad analysiert werden. Wie im Folgenden noch näher dargestellt, führt bei Schrägverzahnungen daher eine Analyse der Geometrie der Verzahnung entlang mindestens eines Pfades, welcher sich zumindest in einem Teilbereich schräg über die Zahnflanke erstreckt, zu deutlich aussagekräftigeren Ergebnissen. Hierbei verläuft der Messpfad so auf der Zahnflanke, dass er einen Eingriffsbereich auf der Zahnflanke über mindestens 50 % der Erstreckung des Eingriffsbereichs in Profilrichtung und in Flankenlinienrichtung überstreicht. Hierdurch wird sichergestellt, dass mit nur einem Messpfad ein ausreichend großer Bereich des Eingriffsbereichs erfasst wird.

Der Eingriffsbereich auf der Zahnflanke ist im Rahmen der vorliegenden Erfindung jener Bereich, mit welchem die Schrägverzahnung bei einem Abrollen auf einer Gegenverzahnung mit dieser in Eingriff kommt, d.h. welcher in Kontakt mit der Gegenverzahnung tritt. Dieser Bereich ist bei Verzahnungen üblicherweise im Datenblatt angegeben. Der Eingriffsbereich kann hierbei kleiner als die Zahnflanke sein.

Um ausreichend Datenpunkte für eine solche Analyse zur Verfügung zu haben, müsste die Zahnflanke bei den aus dem Stand der Technik bekannten Verfahren zur Vermessung der Oberfläche dagegen mit einer Vielzahl von Messpfaden flächig vermessen werden. Mit dem erfindungsgemäßen Verfahren reicht jedoch im einfachsten Fall ein einziger Messpfad aus, und dennoch kann eine aussagekräftige Analyse vorgenommen werden.

Gemäß einer möglichen Ausgestaltung der vorliegenden Erfindung ist vorgesehen, dass der Messpfad einen Eingriffsbereich auf der Zahnflanke über mindestens 60 % seiner Erstreckung in Profilrichtung und/oder in Flankenlinienrichtung überstreicht, weiter bevorzugt über mindestens 80 % seiner Erstreckung in Profilrichtung und/oder in Flankenlinienrichtung, weiter bevorzugt über mindestens 90 % seiner Erstreckung in Profilrichtung und/oder in Flankenlinienrichtung. Insbesondere kann der Messpfad den Eingriffsbereich über seine gesamte Erstreckung in Profilrichtung und/oder in Flankenlinienrichtung überstreichen.

Gemäß einer weiteren möglichen Ausgestaltung der vorliegenden Erfindung ist vorgesehen, dass der Messpfad die Zahnflanke über mindestens 50 % ihrer Erstreckung in Profilrichtung und/oder in Flankenlinienrichtung überstreicht, weiter bevorzugt über mindestens 60 % ihrer Erstreckung in Profilrichtung und/oder in Flankenlinienrichtung, weiter bevorzugt über mindestens 80 % oder 90 % ihrer Erstreckung in Profilrichtung und/oder in Flankenlinienrichtung. Hierdurch ist erst recht sichergestellt, dass der Eingriffsbereich ausreichend erfasst wird, da dieser im allgemeinen einen Teilbereich der Zahnflanke bildet.

Gemäß einer möglichen Ausgestaltung der vorliegenden Erfindung handelt es sich bei der Schrägverzahnung um eine evolventische Verzahnung.

Als Zahnflanke wird in diesem Fall der evolventische Bereich der Verzahnung bezeichnet.

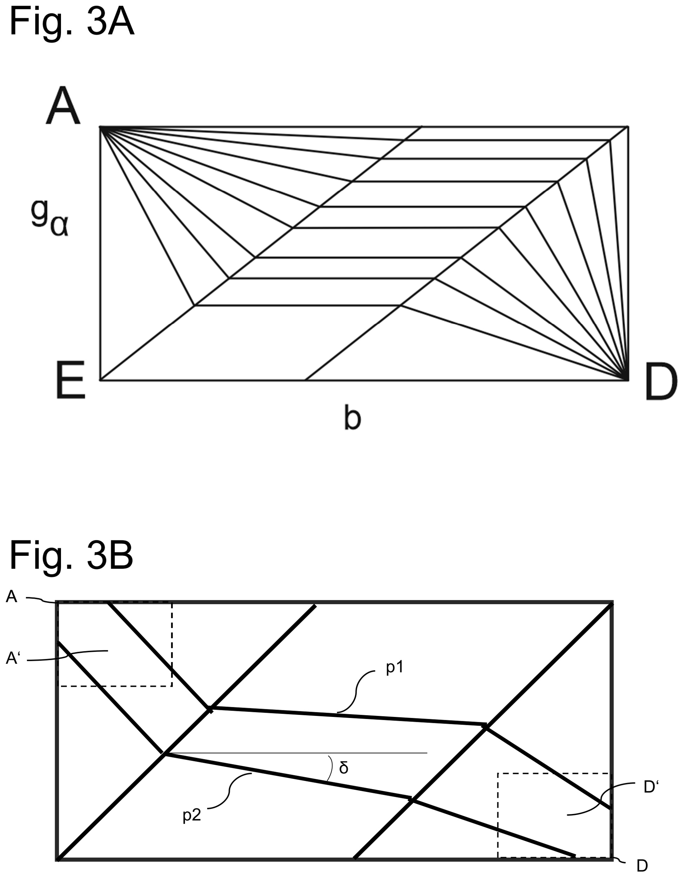

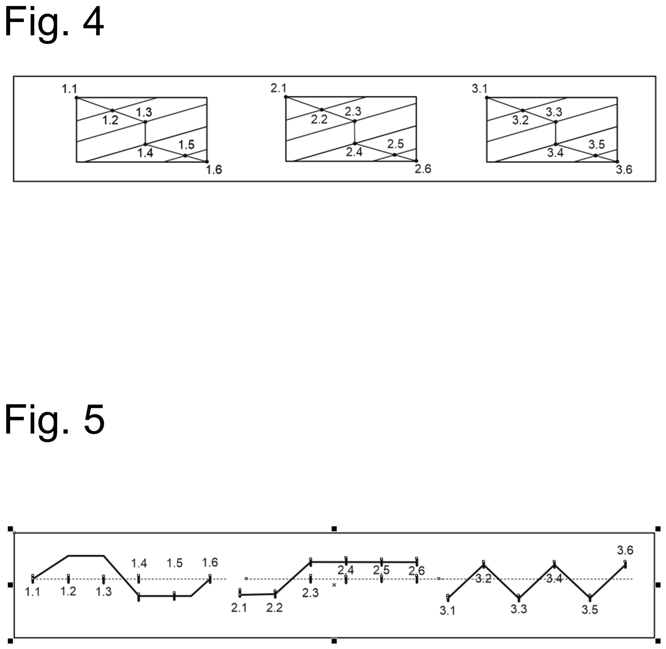

Im Falle einer evolventischen Verzahnung beziehen sich die oben genannten Prozentwerte der Erstreckung auf die Erstreckung in einem Wälzlängen-Breiten-Diagramm. Solche Diagramme sind in Fig. 3 und 4 gezeigt.

Die vorliegende Erfindung ist jedoch auch auf nicht-evolventische Verzahnungen anwendbar. In diesem Fall beziehen sich die Angaben ebenfalls auf ein Wälzlängen-Breiten-Diagramm, wobei als Wälzlänge die Bogenlänge der Eingriffstrecke herangezogen wird.

Gemäß einer möglichen Ausgestaltung der vorliegenden Erfindung weist der mindestens eine Messpfad einen ersten und einen zweiten Teilbereich auf, in welchem er sich schräg über die Zahnflanke erstreckt, wobei sich zwischen dem ersten und dem zweiten Teilbereich bevorzugt ein Abschnitt befindet, in welchem der mindestens eine Messpfad mit einem anderen Winkel als im ersten und/oder zweiten Teilbereich verläuft. Insbesondere kann der Winkel, in welchem der Messpfad im dem Abschnitt zwischen dem ersten und dem zweiten Teilbereich verläuft, einen Winkel von maximal 20° und bevorzugt maximal 10° zur Profilrichtung oder zur Flankenlinienrichtung aufweisen. Besonders bevorzugt verläuft er in Profilrichtung oder in Flankenlinienrichtung. Hierdurch folgt der Messpfad der typischen Form eines Kontaktpfades auf der Zahnflanke und eignet sich daher besonders gut für eine Analyse.

Gemäß einer möglichen Ausgestaltung der vorliegenden Erfindung erstreckt sich der mindestens eine Messpfad von einem ersten Eckbereich des Eingriffsbereichs auf der Zahnflanke zur einem diagonal gegenüberliegenden Eckbereich des Eingriffsbereichs. Bevorzugt weisen hierbei die Eckbereiche eine Erstreckung von maximal 25 % der Höhe und der Breite des Eingriffsbereichs um die jeweilige Ecke auf, bevorzugt maximal 10 %. Höhe und Breite sind hierbei wiederum als Höhe in Profilrichtung und Breite in Flankenlinienrichtung zu verstehen. Auch hierdurch ist der Messpfad der typischen Form eines Kontaktpfades auf der Zahnflanke zumindest angenähert und eignet sich daher besonders gut für eine Analyse.

Gemäß einer bevorzugten Ausgestaltung der vorliegenden Erfindung erstreckt sich der mindestens eine Messpfad einer ersten Ecke des Eingriffsbereichs auf der Zahnflanke zur diagonal gegenüberliegenden Ecke des Eingriffsbereichs. Hierdurch entspricht der Messpfad der typischen Form eines Kontaktpfades auf der Zahnflanke und eignet sich daher am besten für eine Analyse.

Auch die oben genannten Winkel und Prozentsätze beziehen sich wiederum auf die Ersteckung des Messpfades in einem Wälzlängen-Breiten-Diagramm, welches bei evolventischen Verzahungen durch die Wälzgeometrie zur Verfügung steht und für welches bei nicht-evolventischen Verzahnungen als Wälzlänge die Bogenlänge der Eingriffstrecke herangezogen wird.

Gemäß einer möglichen Ausgestaltung der vorliegenden Erfindung wird die Position und/oder der Verlauf des mindestens einen Messpfades in Abhängigkeit von der Makrogeometrie der Verzahnung und/oder einer Getriebestufe aus der Verzahnung und einer Gegenverzahnung, insbesondere einem Gegenrad, bestimmt. Hierdurch kann der Messpfad an die Eingriffsverhältnisse an der Verzahnung angepasst werden.

Insbesondere wird die Position und/oder der Verlauf des mindestens einen Messpfades in Abhängigkeit von der Sprungüberdeckung bestimmt, d.h. dem Verhältnis von Verzahnungsbreite b zu Axialteilung px der Verzahnung. Diese ist entscheidend für den Verlauf der Kontaktpfade auf der Zahnflanke.

Alternativ oder zusätzlich wird die Position und/oder der Verlauf des mindestens einen Messpfades in Abhängigkeit von der Eingriffstrecke, dem Eingriffsbereich, der Verzahnungsbreite und/oder dem Grundschrägungswinkel bestimmt. Auch diese haben einen Einfluss auf den Verlauf der Kontaktpfade.

Alternativ oder zusätzlich kann für die Bestimmung der Sprungüberdeckung und/oder des Messpfades anstelle der Verzahnungsbreite die Eingriffsbreite genutzt werden. Dies ist insbesondere dann von Vorteil, wenn die Verzahnung nicht über ihre gesamte Breite mit dem Gegenrad im Eingriff ist.

Gemäß einer möglichen Ausgestaltung der vorliegenden Erfindung wird die Position und/oder der Verlauf des mindestens einen Messpfades in Abhängigkeit von der Makrogeometrie einer Getriebestufe aus der Verzahnung und einer Gegenverzahnung, insbesondere einem Gegenrad, bestimmt, insbesondere in Abhängigkeit von dem hierdurch definierten Eingriffsbereich auf der Zahnflanke.

Gemäß einer möglichen Ausgestaltung der vorliegenden Erfindung wird ein theoretischer Kontaktpfad mit einer Gegenverzahnung, insbesondere einem Gegenrad, bestimmt und der Verlauf des Messpfades auf Grundlage des Kontaktpfades bestimmt.

Insbesondere wird der Messpfad hierbei so bestimmt, dass er nur um einen maximal zulässigen Betrag von einem Verlauf des Kontaktpfades abweicht.

Gemäß einer möglichen Ausgestaltung der vorliegenden Erfindung erstreckt sich der mindestens eine Messpfad entlang eines theoretischen Kontaktpfades mit einem Gegenrad. Bevorzugt wird daher der Verlauf eines mit einem Gegenrad bestimmt und der Messpfad so gewählt, dass er entlang des theoretischen Kontaktpfades verläuft.

Gemäß einer möglichen Ausgestaltung der vorliegenden Erfindung ist der Kontaktpfad mit einer Gegenverzahnung und insbesondere einem Gegenrad durch den Verlauf eines Punktes der Berührlinien von Verzahnung und Gegenverzahnung, insbesondere Gegenrad, beim Abrollen aufeinander definiert, welcher die Berührlinien bezüglich ihrer Länge in einem vorgegebenen Verhältnis teilt.

Bevorzugt wird hierbei ein Messpfad gewählt, welcher dem zentralen Kontaktpfad entspricht, d.h. einem Kontaktpfad mit einem Gegenrad, welcher durch den Verlauf des Mittelpunktes der Berührlinien definiert ist bzw. die Berührlinien jeweils hälftig teilt.

Gemäß einer weiteren möglichen Ausgestaltung der vorliegenden Erfindung erfolgt die Vermessung auf einer Verzahnungsmessmaschine, welche eine Eingabefunktion aufweist, über welche die Position und/oder der Verlauf des mindestens einen Messpfades und/oder die Anzahl der Messpfade pro Zahnflanke einstellbar ist.

Gemäß einer weiteren möglichen Ausgestaltung der vorliegenden Erfindung wird die Zahnflanke nur entlang eines einzigen Messpfades vermessen. Schon dies erlaubt sinnvolle Analysen der Zahnflanke.

Gemäß einer möglichen Ausgestaltung der vorliegenden Erfindung wird die Zahnflanke entlang einer Mehrzahl von Messpfaden vermessen, welche sich zumindest in einem Teilbereich schräg über die Zahnflanke erstrecken.

Bevorzugt handelt es sich hierbei um Messpfade, welche so verlaufen und/oder bestimmt werden, wie dies bereits oben für den mindestens einen Messpfad beschrieben wurde.

Insbesondere werden hierbei mehrere Messpfade eingesetzt, welche sich jeweils entlang eines theoretischen Kontaktpfades mit einem Gegenrad erstecken, wobei die Kontaktpfade die Berührlinien bezüglich ihrer Länge jeweils in einem unterschiedlichen Verhältnis teilen.

Gemäß einer möglichen Ausgestaltung der vorliegenden Erfindung weisen alle Messpfade die gleichen Endpunkte auf, wobei die Messungen bevorzugt in beide Richtungen durchgefahren werden. Es folgt daher auf die Messung entlang eines ersten Messpfades, welche in eine erste Richtung abgefahren wird, unmittelbar die Messung entlang eines zweiten Messpfades, welche in die Gegenrichtung gefahren wird.

Gemäß einer weiteren möglichen Ausgestaltung der vorliegenden Erfindung wird eine Mehrzahl von Zahnflanken der Verzahnung jeweils entlang mindestens eines Messpfads vermessen, welcher sich zumindest in einem Teilbereich schräg über die Zahnflanke erstreckt. Durch die Vermessung mehrerer Zahnflanken wird die Analyse der Verzahnung verbessert.

Bevorzugt handelt es sich hierbei jeweils um Messpfade, welche so verlaufen und/oder bestimmt werden, wie dies bereits oben für den mindestens einen Messpfad beschrieben wurde.

Gemäß einer weiteren möglichen Ausgestaltung der vorliegenden Erfindung wird die Mehrzahl von Zahnflanken jeweils nur entlang eines einzigen Messpfades vermessen.

Gemäß einer weiteren möglichen Ausgestaltung der vorliegenden Erfindung wird die Mehrzahl von Zahnflanken jeweils entlang des gleichen Messpfades vermessen. Hierdurch wird die Konsistenz der Analyse verbessert.

Insbesondere werden die Zahnflanken jeweils entlang eines Messpfads vermessen, welcher sich entlang eines theoretischen Kontaktpfades mit einem Gegenrad erstreckt, der durch den Verlauf des Mittelpunktes der Berührlinien zwischen Verzahnung und Gegenrad definiert ist.

Das erfindungsgemäße Verfahren und die erfindungsgemäßen Messpfade können für beliebige Ausgestaltungen des Messverfahrens eingesetzt werden.

So kann die Vermessung der Zahnflanke entlang des Messpfades sowohl punktweise als auch scannend erfolgen, d.h. je nach Ausgestaltung für einzelne diskrete Punkte entlang des Messpfades oder kontinuierlich für den gesamten Messpfad. Bevorzugt erfolgt jedoch eine scannende Messung.

Als Sensor kann insbesondere ein taktiler Sensor eingesetzt werden, insbesondere ein taktiler Messtaster. Dieser kann entweder tastend für diskrete Punkte oder scannend eingesetzt werden.

Ebenso kann ein optischer Sensor eingesetzt werden, beispielsweise ein optischer Messtaster.

In einem zweiten Aspekt umfasst die vorliegende Erfindung ein Verfahren zur Analyse der Geometrie einer Schrägverzahnung, wobei zur Analyse die Geometrie der Verzahnung entlang mindestens eines Pfades betrachtet wird, welcher sich zumindest in einem Teilbereich schräg über die Zahnflanke erstreckt. Wie bereits zum ersten Aspekt erläutert ergibt eine Analyse entlang eines solchen Pfades bei Schrägverzahnungen zu deutlich aussagekräftigeren Ergebnissen, da der Unterscheid zwischen dem untersuchten Pfad und den tatsächlichen Kontaktpfaden auf der Verzahnung geringer ist als bei der Untersuchung entlang einer Profil- oder Flankenlinie.

Gemäß einer möglichen Ausgestaltung der vorliegenden Erfindung erfolgt im Rahmen der Analyse eine Welligkeits- und/oder Schwingungsanalyse der Geometrie der Schrägverzahnung.

Insbesondere wird hierbei die Welligkeit entlang des Pfades analysiert, beispielsweise durch eine Zerlegung der Welligkeit in unterschiedliche Frequenzen, beispielsweise durch eine Fourier-Analyse, und/oder durch Ermittlung eines Spektrums der Welligkeitsamplituden entlang des Pfades.

Gemäß einer möglichen Ausgestaltung der vorliegenden Erfindung erfolgt die Analyse entlang genau eines Pfades über die Zahnflanke, d.h. es wird pro Zahnflanke nur ein Pfad betrachtet.

Gemäß einer möglichen Ausgestaltung der vorliegenden Erfindung überstreicht der mindestens eine Pfad einen Eingriffsbereich auf der Zahnflanke über mindestens 50 % seiner Erstreckung in Profilrichtung und in Flankenlinienrichtung.

Gemäß einer möglichen Ausgestaltung der vorliegenden Erfindung ist vorgesehen, dass der Pfad einen Eingriffsbereich auf der Zahnflanke über mindestens 60 % seiner Erstreckung in Profilrichtung und/oder in Flankenlinienrichtung überstreicht, weiter bevorzugt über mindestens 80 % seiner Erstreckung in Profilrichtung und/oder in Flankenlinienrichtung, weiter bevorzugt über mindestens 90 % seiner Erstreckung in Profilrichtung und/oder in Flankenlinienrichtung. Insbesondere kann der Pfad den Eingriffsbereich über seine gesamte Erstreckung in Profilrichtung und/oder in Flankenlinienrichtung überstreichen.

Gemäß einer weiteren möglichen Ausgestaltung der vorliegenden Erfindung ist vorgesehen, dass der Pfad die Zahnflanke über mindestens 50 % ihrer Erstreckung in Profilrichtung und/oder in Flankenlinienrichtung überstreicht, weiter bevorzugt über mindestens 60 % ihrer Erstreckung in Profilrichtung und/oder in Flankenlinienrichtung, weiter bevorzugt über mindestens 80 % oder 90 % ihrer Erstreckung in Profilrichtung und/oder in Flankenlinienrichtung. Hierdurch ist erst recht sichergestellt, dass der Eingriffsbereich ausreichend erfasst wird, da dieser im allgemeinen einen Teilbereich der Zahnflanke bildet.

Gemäß einer möglichen Ausgestaltung der vorliegenden Erfindung weist der mindestens eine Pfad einen ersten und einen zweiten Teilbereich auf, in welchem er sich schräg über die Zahnflanke erstreckt, wobei zwischen dem ersten und dem zweiten Teilbereich bevorzugt ein Abschnitt befindet, in welchem der mindestens eine Pfad mit einem anderen Winkel als im ersten und/oder zweiten Teilbereich verläuft. Alternativ oder zusätzlich kann der mindestens eine Pfad in diesem Bereich mit einem Winkel von maximal 20° und bevorzugt maximal 10° zur Profilrichtung oder zur Flankenlinienrichtung verlaufen, bevorzugt in Profilrichtung oder in Flankenlinienrichtung.

Gemäß einer möglichen Ausgestaltung der vorliegenden Erfindung erstreckt sich der mindestens eine Pfad von einem ersten Eckbereich des Eingriffsbereichs auf der Zahnflanke zur einem diagonal gegenüberliegenden Eckbereich des Eingriffsbereichs. Bevorzugt weisen hierbei die Eckbereiche eine Erstreckung von maximal 25 % der Höhe und der Breite des Eingriffsbereichs um die jeweilige Ecke auf, bevorzugt maximal 10 %. Höhe und Breite sind hierbei wiederum als Höhe in Profilrichtung und Breite in Flankenlinienrichtung zu verstehen. Auch hierdurch ist der Pfad der typischen Form eines Kontaktpfades auf der Zahnflanke zumindest angenähert und eignet sich daher besonders gut für eine Analyse.

Gemäß einer möglichen Ausgestaltung der vorliegenden Erfindung erstreckt sich der mindestens eine Pfad von einer ersten Ecke eines Eingriffsbereichs auf der Zahnflanke zur diagonal gegenüberliegenden Ecke des Eingriffsbereichs.

Wie bereits oben zu den Messpfaden beschrieben entsprechen diese Ausgestaltungen des Pfades der generellen Form der Kontaktpfade von Schrägverzahnungen, so dass sich entlang dieser Pfade relevantere Ergebnisse ergeben.

Gemäß einer möglichen Ausgestaltung der vorliegenden Erfindung handelt es sich bei der Schrägverzahnung auch im Rahmen des zweiten Aspekts um eine evolventische Verzahnung.

Als Zahnflanke wird in diesem Fall der evolventische Bereich der Verzahnung bezeichnet.

Im Falle einer evolventischen Verzahnung beziehen sich die oben genannten Prozentwerte und Winkelangaben der Erstreckung auf die Erstreckung bzw. den Verlauf des Pfades in einem Wälzlängen-Breiten-Diagramm. Solche Diagramme sind in Fig. 3 und 4 gezeigt.

Die vorliegende Erfindung ist jedoch auch gemäß dem zweiten Aspekt auf nicht-evolventische Verzahnungen anwendbar. In diesem Fall beziehen sich die Angaben ebenfalls auf ein Wälzlängen-Breiten-Diagramm, wobei als Wälzlänge die Bogenlänge der Eingriffstrecke herangezogen wird.

Gemäß einer möglichen Ausgestaltung der vorliegenden Erfindung wird die Position und/oder der Verlauf des mindestens einen Messpfades in Abhängigkeit von der Makrogeometrie der Verzahnung und/oder einer Getriebestufe aus der Verzahnung und einem Gegenrad bestimmt, insbesondere in Abhängigkeit von der Sprungüberdeckung.

Alternativ oder zusätzlich wird die Position und/oder der Verlauf des mindestens einen Pfades in Abhängigkeit von der Eingriffstrecke, der Verzahnungsbreite und/oder dem Grundschrägungswinkel bestimmt.

Gemäß einer möglichen Ausgestaltung der vorliegenden Erfindung erstreckt sich der mindestens eine Pfad entlang eines theoretischen Kontaktpfades mit einem Gegenrad.

Die Vorteile wurden bereits oben im Hinblick auf die Bestimmung der Messpfade erläutert.

Gemäß einer möglichen Ausgestaltung der vorliegenden Erfindung ist der Kontaktpfad, welcher als Pfad für die Analyse gewählt wird, durch die Mittelpunkte der Berührlinien von Verzahnung und Gegenrad definiert.

Gemäß einer weiteren möglichen Ausgestaltung erfolgt die Analyse entlang einer Mehrzahl von Pfaden, welche sich schräg über die Zahnflanke erstrecken. Bevorzugt verlaufen diese Pfade so und/oder werden so bestimmt, wie dies oben beschrieben wurde.

Weiterhin werden der oder die Pfade für die Analyse bevorzugt so bestimmt und/oder verlaufen so, wie dies oben für die Messpfade bereits beschrieben wurde.

Gemäß einer möglichen Ausgestaltung der vorliegenden Erfindung wird zur Analyse die Geometrie der Verzahnung vermessen und die durch die Vermessung bestimmte Geometrie der Verzahnung analysiert.

Das Verfahren gemäß dem zweiten Aspekt ist zunächst unabhängig von dem Verfahren gemäß dem ersten Aspekt. Beispielsweise könnte die Analyse gemäß dem zweiten Aspekt auch auf Grundlage von Messdaten erfolgen, welche gemäß einem Verfahren gemäß dem Stand der Technik ermittelt wurden. In diesem Fall ist es jedoch notwendig, die Zahnflanke an einer Mehrzahl von Profillinien und/oder Flankenlinien zu vermessen.

Bevorzugt erfolgt die Analyse die Geometrie der Verzahnung daher auf Grundlage von Messdaten, welche durch ein erfindungsgemäßes Verfahren gemäß dem ersten Aspekt ermittelt wurden.

Gemäß einer möglichen Ausgestaltung der vorliegenden Erfindung wird hierbei zur Analyse die Geometrie der Verzahnung entlang mindestens eines Pfades betrachtet, entlang welchem die Verzahnung vermessen wurde. Insbesondere erfolgt die Analyse hierbei entlang eines Messpfades, entlang welchem die Verzahnung mit einem Verfahren gemäß dem ersten Aspekt, wie er oben beschrieben wurde, vermessen wurde.

Gemäß einer möglichen Ausgestaltung der vorliegenden Erfindung wird die Geometrie einer Mehrzahl von Zahnflanken entlang eines Pfades über die jeweilige Zahnflanke für die Analyse gemäß der Teilung der Verzahnung überlagert. Bevorzugt wird hierbei jeweils der gleiche Pfad eingesetzt.

Insbesondere wird eine Mehrzahl von Zahnflanken der Verzahnung entlang mindestens eines Messpfads vermessen und die entlang des jeweiligen Messpfads gemessene Geometrie der Zahnflanken für die Analyse gemäß der Teilung der Verzahnung überlagert. Insbesondere werden hierbei Messpfade eingesetzt, wie sie zum ersten Aspekt beschrieben wurden.

Bevorzugt wird nur ein einziger Messpfad pro Zahnflanke für die Überlagerung und Analyse betrachtet.

Gemäß einer möglichen Ausgestaltung der vorliegenden Erfindung werden zur Analyse einer Getriebestufe beide Zahnräder erfindungsgemäß vermessen und/oder analysiert, insbesondere entlang eines zentralen Kontaktpfades.

Gemäß einer möglichen Ausgestaltung der vorliegenden Erfindung werden bei der Herstellung von Getriebestufen die beiden Zahnräder erfindungsgemäß vermessen und/oder analysiert, wobei fehlerhafte Zahnräder und/oder Getriebestufen ersetzt und/oder aussortiert werden. Insbesondere kann hierbei eine Prüfung für alle hergestellten Getriebestufen erfolgen.

Bei allen bisher beschriebenen Aspekten der vorliegenden Erfindung ist die Schrägverzahnung bevorzugt auf einem Zahnrad angeordnet, insbesondere einem Zahnrad mit einem zylindrischen oder konischen Grundkörper. Bei dem Gegenrad, mit welchem die Kontaktpfade bestimmt werden, handelt es sich bevorzugt ebenfalls um ein Zahnrad, insbesondere einem Zahnrad mit einem zylindrischen oder konischen Grundkörper.

Die vorliegende Erfindung umfasst weiterhin eine Verzahnungsmessmaschine mit einer Werkstückaufnahme und einem Sensor, über welchen die Geometrie mindestens einer Zahnflanke einer Verzahnung eines in der Werkstückaufnahme aufgenommenen Werkstücks vermessbar ist, wobei die Verzahnungsmessmaschine eine oder mehrere Bewegungsachsen aufweist, über welche der Sensor entlang mindestens eines Messpfades über eine Zahnflanke der Verzahnung geführt werden kann, um die Geometrie der Zahnflanke entlang des Messpfades an einer Mehrzahl von Punkten zu vermessen, wobei die Verzahnungsmessmaschine eine Steuerung aufweist, welche eingerichtet ist, um ein Verfahren durchzuführen, wie es oben im Hinblick auf den ersten und/oder zweiten Aspekt beschrieben wurde.

Insbesondere ist die Steuerung programmiert, um ein Verfahren durchzuführen, wie es oben im Hinblick auf den ersten und/oder zweiten Aspekt beschrieben wurde.

Bei der Verzahnungsmessmaschine kann es sich auch um eine in eine Verzahnbearbeitungsmaschine integrierte Verzahnungsmessmaschine handeln, beispielsweise indem an einem Bearbeitungskopf der Verzahnbearbeitungsmaschine ein Sensor angeordnet ist, mit welchem die in der Verzahnbearbeitungsmaschine bearbeitetes oder zu bearbeitendes Werkstück vermessen werden kann. Bei der Verzahnungsmessmaschine kann es sich jedoch auch um eine eigenständige Verzahnungsmessmaschine handeln.

Die vorliegende Erfindung umfasst weiterhin ein Computerprogramm, umfassend Befehle, die bei der Ausführung des Programms durch die Steuerung einer Verzahnungsmessmaschine und/oder durch einen Computer diese/n veranlassen, ein Verfahren auszuführen, wie es oben im Hinblick auf den ersten und/oder zweiten Aspekt beschrieben wurde.

Das Computerprogramm kann insbesondere auf einer Steuerung einer Verzahnungsmessmaschine, wie sie oben beschrieben wurde ablaufen, insbesondere zur Durchführung eines Verfahrens gemäß dem ersten Aspekt.

Ein Verfahren gemäß dem zweiten Aspekt kann jedoch auch durch ein Computerprogramm durchgeführt werden, welches auf einem Computer abläuft.

Die Steuerung und/oder der Computer umfassen bevorzugt einen Mikrocontroller und einen nicht-flüchtigen Speicher, auf welchem das Computerprogramm abgespeichert ist. Die Steuerung steht bevorzugt mit Aktoren der Verzahnungsmessmaschine in Verbindung und steuert diese an, um den Sensor entlang des Messpfades zu bewegen, und/oder mit dem Sensor, um die Signale des Sensors zu erfassen und/oder auszuwerten.

Die vorliegende Erfindung wird nun anhand von Ausführungsbeispielen und Zeichnungen näher beschrieben.

Dabei zeigen:
- Fig. 1A und 1B: zwei Diagramme, welche Messpfade gemäß dem Stand der Technik zeigen, die sich entlang von Flankenlinien bzw. Profillinien erstrecken,
- Fig. 2A und 2B: zwei Diagramme, welche den Verlauf der Berührlinien und Kontaktpfade mit einem Gegenrad auf einer Schrägverzahnung für den Fall einer Sprungüberdeckung εβ<1,0 bzw. den Fall einer Sprungüberdeckung εβ>1,0 zeigen,
- Fig. 3A: ein erstes Diagramm, welches den Verlauf einer Mehrzahl von Messpfaden bzw. Pfaden auf einer Zahnflanke in einem Ausführungsbeispiel eines Verfahrens gemäß der vorliegenden Erfindung für den Fall einer Sprungüberdeckung εβ>1,0 zeigt,
- Fig. 3B: ein zweites Diagramm, welches den Verlauf einer Mehrzahl von alternativen Messpfaden bzw. Pfaden auf einer Zahnflanke in einem Ausführungsbeispiel eines Verfahrens gemäß der vorliegenden Erfindung für den Fall einer Sprungüberdeckung εβ>1,0 zeigt,
- Fig. 4: drei Diagramme, welches jeweils den Verlauf eines zentralen Messpfades bzw. Pfades auf mehreren Zahnflanken in einem Ausführungsbeispiel eines Verfahrens gemäß der vorliegenden Erfindung, bei welcher mehrere Zahnflanken vermessen werden, für den Fall einer Sprungüberdeckung εβ<1,0 zeigen,
- Fig. 5: drei Diagramme, welche jeweils die Abweichungen der Geometrie der Zahnflanke von einer Sollgeometrie entlang der in Fig. 4 gezeigten Messpfade bzw. Pfade zeigen,
- Fig. 6: ein Diagramm, in welchem die in Fig. 5 gezeigten Abweichungen auf den einzelnen Zahnflanken unter Berücksichtigung der Teilung überlagert dargestellt sind,
- Fig. 7: zwei Diagramme, von welchen das erste die Ermittlung eines gemeinsamen Abweichungsverlaufs mittels einer Maximalwertbildung bei der in Fig. 6 gezeigten Überlagerung und das zweite den hieraus resultierenden Abweichungsverlauf zeigen.

Wie bereits eingangs beschrieben entsprechen bei einer Geradverzahnung die gemessenen Flankenlinien den Berührlinien im Getriebeeingriff mit einer Gegenverzahnung und insbesondere dem Gegenrad. Die Profilinien entsprechen dem Kontaktpfad von Berührlinienpunkt zu Berührlinienpunkt.

Bei einer Schrägverzahnung laufen die Berührlinien im Gegensatz zur Geradverzahnung jedoch schräg über die Zahnflanke - sie verlaufen umso steiler, je größer der Schrägungswinkel ist.

Der Unterschied von Flankenlinien / Profillinien zu den realen Eingriffsverhältnissen führt hierbei bei einer Analyse der Geometrie der Verzahnung entlang der Flankenlinien und/oder Profillinien zu einer Mehrdeutigkeit bzw. unterschiedlicher Interpretierbarkeit der Ergebnisse, da eben nicht die realen Eingriffsbedingungen Zahnrad / Zahnrad analysiert werden.

Die Kernidee der vorliegenden Erfindung ist es daher, durch die Analyse und/oder Vermessung entlang von Pfaden, welche sich schräg über die Zahnflanke erstrecken und daher einem tatsächlichen Kontaktpfad zumindest deutlich näher kommen als Flankenlinien / Profillinien, die Interpretierbarkeit der Ergebnisse zu verbessern. Der Verlauf des Pfades wird hierbei so gewählt, dass er einen ausreichend großen Teil des Eingriffsbereichs mit der Gegenverzahnung überstreicht, und zwar sowohl in Profilrichtung als auch in Flankenlinienrichtung. Bevorzugt erstrecken sich die Pfade hierbei entlang des tatsächlichen Kontaktpfades im Eingriff der Verzahnung mit der Verzahnung auf einem Gegenrad, d.h. bei Eingriff zweier Zahnräder, oder näher sich einem solchen Kontaktpfad zumindest an.

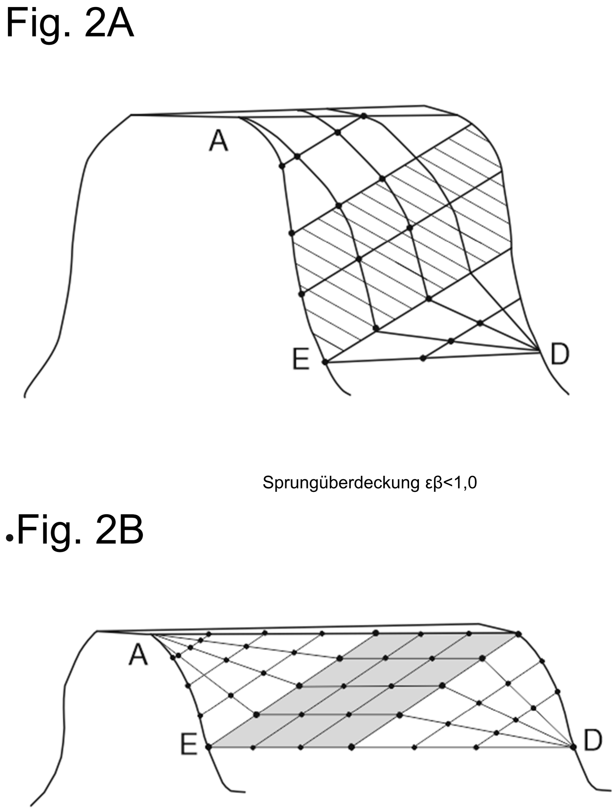

Die Sprungüberdeckung εβ = b/px gibt das Verhältnis von Verzahnungsbreite b zu Axialteilung px wieder. Ist dieses kleiner 1 so werden die schrägen Berührlinien wie in Fig. 2A gezeigt vom Eingriffsbeginn A größer, bis sie über die gesamte Verzahnungsbreite laufen. Dann wälzt sich die Berührlinie über dem Profil bis zum Punkt E um dann zum Eingriffsende D hin wieder kürzer zu werden.

Ist die Sprungüberdeckung wie in Fig. 2B gezeigt größer 1 so werden die schrägen Berührlinien vom Eingriffsbeginn A immer größer, bis sie über die gesamte Profilhöhe laufen um sich dann im Eingriff über die Verzahnungsbreite zu verlagern und schließlich an der anderen Seite zum Eingriffsende D hin über das Profil wieder kürzer zu werden.

Die Kontaktpfade sind hierbei als jene Pfade über die Flanke definiert, welche die Berührlinien im Hinblick auf ihre Länge in einem festen Verhältnis teilen. Beispielsweise wird der zentrale Kontaktpfad durch die Mittelpunkte der Berührlinien gebildet. Fig. 2A und 2B zeigen jeweils den zentralen Kontaktpfad und Kontaktpfade, welche jeweils bei 25 % und 75 % der Länge der Berührlinien verlaufen.

Wie aus Fig. 2A und 2B ersichtlich, verlaufen die Kontaktpfade unabhängig von der Sprungüberdeckung von dem in einer oberen Ecke der Zahnflanke angeordneten Eingriffsbeginn A bis zu dem in der diagonal gegenüberliegenden unteren Ecke der Zahnflanke liegenden Eingriffsende D. Weiterhin weisen die Kontaktpfade für den Fall einer Sprungüberdeckung εβ ungleich 1 jeweils einen ersten und einen zweiten Bereich auf, in welchen sie ausgehend von der jeweiligen Ecke der Zahnflanke schräg über die Zahnflanke verlaufen. Zwischen diesen beiden Bereich liegt ein dritter Bereich, in welchem die Kontaktpfade im Falle einer Sprungüberdeckung εβ<1,0 entlang einer Profillinie verlaufen und im Falle Sprungüberdeckung εβ>1,0 entlang einer Flankenlinie.

Die Profilüberdeckung εα = gα/pe gibt das Verhältnis von Eingriffstrecke gα zur Grundkreisteilung pe wieder. Profilüberdeckung εα = 1 bedeutet, dass eine neue Berührlinie (Punkt A) in Eingriff kommt, sobald die andere Berührlinie grade am Fuß des Profils (Punkt E) angekommen ist um dann über die Sprungüberdeckung über die Verzahnungsbreite bis zum Eingriffsende (Punkt D) zu laufen.

Bei einer Verzahnung mit εα = 1 und εβ = 1 wird die Berührlinie vom Eingriffsbeginn Punkt A immer länger bis Sie im Punkt E die maximale Länge erreicht um dann zum Eingriffsende D gleich wieder kürzer zu werden: es gibt in diesem Fall keinen Abschnitt in den Kontaktpfaden, der parallel zur Flankenline oder zum Profil laufen würde. Die Kontaktpfade verlaufen daher in diesem Fall über ihre gesamte Erstreckung schräg über die Flanke.

Wie in Fig. 3A gezeigt spannen Eingriffstrecke gα und Verzahnungsbreite b das Eingriffsfeld auf, in dem die Berührlinien unter Grundschrägungswinkel βb zur Verzahnungsbreite laufen. Diese Größen bestimmen daher auch den Verlauf der Kontaktlinien auf der Zahnflanke.

Gemäß einer Ausgestaltung der vorliegenden Erfindung werden daher jene Pfade, entlang derer die Geometrie der Verzahnung analysiert und/oder vermessen wird, so gewählt, dass sie den Kontaktpfaden entsprechen oder doch zumindest die grundsätzliche Form der Kontaktpfade aufweisen. Bevorzugt werden die Pfade daher in Abhängigkeit von den oben genannten Größen bestimmt.

Fig. 3A zeigt hierbei den Verlauf von 9 Pfaden, welche zur Analyse und/oder Messung eingesetzt werden, und welche den Kontaktpfaden von 9 Berührpunkten je Berührlinie bei einer Verzahnung mit Sprungüberdeckung εβ>1,0 entsprechen. Die Berührlinien werden hierbei beispielhaft in 9 Abschnitte unterteilt. Die Mittelpunkte jedes Abschnitts werden über die Eingriffsbewegung von A über E nach D zu den jeweiligen Kontaktpfaden verbunden.

Die in Fig. 3A gezeigten Pfade verlaufen hierbei von einer Ecke A des Eingriffsbereichs zur diagonal gegenüberliegenden Ecke D. Weiterhin weisen sie erste und zweite Abschnitte auf, in welchen sie sich - jeweils ausgehend von den Ecken A bzw. D schräg über die Zahnflanke erstrecken. Dazwischen liegt ein Bereich, in welchem sich die Pfade in Flankenlinienrichtung erstrecken.

In Fig. 3B sind alternative Pfade p1 und p2 gezeigt, welche ebenfalls als Messpfade oder als Pfade zur Analyse herangezogen werden könnten, und welchen den Kontaktpfaden lediglich angenähert sind.

Die Pfade p1 und p2 verlaufen hierbei von einem Eckbereich A' zu einem diagonal gegenüberliegenden Eckbereich D', ohne dass sie notwendigerweise die Ecken A und D erreichen.

Weiterhin sind auch hier zwei Bereiche ausgehend von den Eckbereichen vorgesehen, in welchen die Pfade schräg verlaufen. Im dazwischenliegenden Bereich verlaufen die Pfade ebenfalls schräg, jedoch mit einem anderen Winkel als im ersten oder zweiten Bereich. Insbesondere weicht hierbei der Verlauf der Pfade im mittleren Bereich um einem Winkel δ von maximal 20° von der Flankenlinienrichtung ab.

Die Pfade p1 und p2 überstreichen den sich zwischen den Punkten A und D erstreckenden Eingriffsbereich zwar nicht mehr über seine gesamte Erstreckung in Profilrichtung (im Diagramm die vertikale Richtung) und Flankenlinienrichtung (im Diagramm die horizontale Richtung). Der Anteil der Erstreckung in Profilrichtung und Flankenlinienrichtung, welcher überdeckt wird, ist jedoch noch ausreichend groß, um eine relevante Analyse zu ermöglichen. Insbesondere ist der Anteil hierbei größer als 50 % der jeweiligen Erstreckung, bevorzugt aber auch größer.

Bei einer Sprungüberdeckung von εβ<1,0 gilt das gleiche, nur dass der mittlere Bereiche um maximal 20° von der Profilrichtung abweichen würde, da er an die Profilrichtung angenähert werden soll.

Die erfindungsgemäßen Pfade beinhalten nun genau jene Topologie-Information, welche von höherwertigen Berechnungsprogrammen wie z. B. dem Dynamischen Zahn Kräfte Programm (DZP) zur Beurteilung des NVH-Verhaltens Zahnrades eingesetzt werden können.

Hierbei wird die gleiche Kontaktpfadtopologie auch vom Gegenrad benötigt, um über die Getriebestufe eine entsprechende Aussage treffen zu können.

Geht es jedoch nur darum, Abweichungen eines einzelnen Zahnrades zu bewerten, kann das Gegenrad abweichungsfrei angenommen werden.

Die Grunddaten der Getriebestufe geben aber die Eingriffstrecke gα und die Breite des Eingriffsfeldes vor.

Die Anzahl der Berührlinienabschnitte sowie deren genaue Lage sollte frei vorgegeben werden, um auch für andere Programme wie z.B. Rikor die entsprechenden Daten zur Verfügung stellen zu können.

Da Welligkeiten entlang dieser Kontaktpfade der direkten Anregung im Getriebe entsprechen, ist eine höhere Korrelation mit den Ergebnissen des End-of-Line Prüfstands zu erwarten.

Derzeit werden moderne Berechnungsprogramme mit klassischen Topologie-Daten versorgt und ermitteln sich dann intern die Werte der Kontaktpfadtopologie.

Es ist aber möglich, aus einer Kontaktpfadtopologie eine Profillinien-Topologie / Flankenlinien-Toplogie abzuleiten (z.B. durch Flächeninterpolation), sodass die daraus wiederum rück-ermittelten Werte der Kontaktpfadtopologie der Ausgangstopologie entsprechen (bis auf geringe Abweichungen durch den Interpolationsalgorithmus).

Eine Anpassung der Anzahl der Kontaktpfade bzw. deren Lage ist gegebenfalls in Abhängigkeit von dem eingesetzten Analyseprogramm nötig. Entsprechende Eingabemöglichkeiten sind an der Messmaschine vorzusehen.

Die gewonnenen Informationen können aber nicht nur für weiterführende Berechnungsprogramme verwendet werden.

Je nach erforderlicher Genauigkeit und Zeitbudget kann die Anzahl der Kontaktpfadmesslinien in der Topologie angepasst werden (z.B. im Bereich 9, 5, 3 oder 1). Der im Vergleich zu herkömmlichen Topographiemessungen reduzierte Zeitaufwand ermöglicht u.U. die Messung der Kontaktpfadtopologie auf mehreren oder insbesondere allen Zähnen.

Damit ist auch eine Welligkeitsanalyse möglich, wie sie im Folgenden aufgezeigt wird:
Mit der zentralen Kontaktpfadlinie (also jenem Kontaktpfad entlang der Mittelpunkte aller Berührlinien des Getriebeeingriffs) ist dies in Fig. 4 bis 7 beispielhaft dargestellt für 3 Zähne einer Verzahnung geringer Sprungüberdeckung:
Wie aus Fig. 4 ersichtlich, verläuft zwischen den Punkten x.3 und x.4 der Kontaktpfad entlang des Profils - in den anderen Bereichen schräg zum Eingriffsbeginn A oder Eingriffsende D.

Nun kann man die jeweils entlang des Kontaktpfades gemessenen Abweichungen der Punkte x.1 bis x.6 wie in Fig. 5 beispielhaften dargestellt abwickeln.

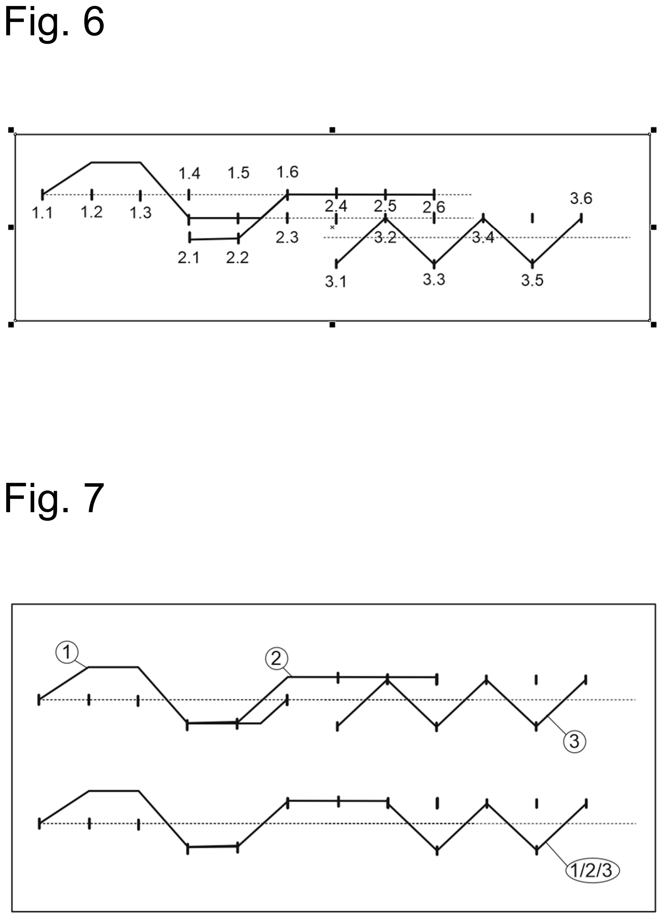

Daraufhin werden die abgewickelten Abweichungen auf den einzelnen Zahnflanken, welche entlang der Kontaktpfade bestimmt wurden, entsprechend der Teilung (gegebenenfalls auch unter Berücksichtigung der Einzelteilungsabweichungen von Zahn zu Zahn) überlagert, wie dies in Fig. 6 dargestellt ist.

Wie in Fig. 7 dargestellt erfolgt die Überlagerung dadurch, dass für jeden Punkt der Maximalwert der jeweiligen überlagerten Abweichungen als Wert für die Gesamt-Abweichung gewählt wird. Hierdurch ergibt sich ein resultierender Verlauf der Abweichungen der Kontaktpfade.

Bevorzugt erfolgt die Vermessung und Überlagerung für alle Zähne der Verzahnung.

Die Gesamt-Abweichung bzw. der resultierende Verlauf der Abweichungen kann dann analysiert werden, beispielsweise einer Welligkeitsanalyse unterzogen werden.

Beispielsweise wird hierbei über Ausgleichsinus das Spektrum der Welligkeit ermittelt.

Das Ergebnis kann zum Abgleich mit Ergebnissen von Getriebeprüfständen und/oder zur Beurteilung des Fertigungsprozesse verwendet werden.

In einer möglichen Ausgestaltung werden auch noch die Abweichungen des Gegenrades berücksichtigt, so dass sich ein Welligkeitsspektrum zum Vergleich mit dem realen Zahneingriffs im EOL-Prüfstand ergibt.

In einer möglichen Ausgestaltung kann erfindungsgemäß in der Produktion eine Prüfung der Zahnräder einer Zahnradpaarung (insbesondere durch Messung nur entlang der zentralen Kontaktpfadlinien) erfolgen, um die Zahnradpaarung vor Montage zu prüfen und nötigenfalls zu verändern oder auszusortieren. Insbesondere kann hierbei eine Prüfung aller Zahnräder erfolgen, d.h. eine 100% Prüfung durchgeführt werden.

Die bisherigen Ausführungen beschreiben den Sachverhalt für unmodifizierte Verzahnungen. Die vorliegende Erfindung kann jedoch auch zur Erfassung von Abweichungen von modifizierten Verzahnungen angewandt werden.

In der Praxis werden Verzahnungen insbesondere aus Gründen der Tragfähigkeit modifiziert ausgeführt: Balligkeiten oder Endrücknahmen entlasten kritische Flankenbereiche.

Die Berührung mit dem Gegenrad findet hierbei allerdings nicht mehr über die gesamte Erstreckung der theoretischen Berührlinien statt. Vielmehr stellt sich in jeder Eingriffsstellung ohne Last nur jeweils an einem Punkt der Berührlinie Kontakt ein. Die Verbindung dieser Berührpunkte ergibt den realen lastfreien Kontaktpfad.

Die Abweichungen zwischen einem solchen realen lastfreien Kontaktpfad und den oben beschriebenen Kontaktpfaden sind jedoch immer noch deutlich kleiner als die Abweichungen zu einer Flanken- oder Profillinie, wie sie im Stand der Technik eingesetzt wurden. Daher können die oben beschriebenen Kontaktpfade auch für modifizierte Verzahnungen als Mess- oder Analysepfade eingesetzt werden und verbessern auch hier die Aussagekraft der Daten.

Alternativ kann bei modifizierten Verzahnungen der reale lastfreie Kontaktpfad bestimmt werden. Dieser ist nur mit höherwertigen Berechnungsprogrammen zu bestimmen, könnte aber insbesondere für die Frage des lastfreien NVH Verhaltens als Vorgabe für die Messtrecke dienen.

Einige mögliche Vorteile der vorliegenden Erfindung werden im Folgenden noch einmal näher beschrieben.

Erfindungsgemäß entsprechen die Auswertungen entlang des Kontaktpfades den tatsächlichen Eingriffsverhältnissen im Getriebe.

Die Messung kann bei höherem Informationsgehalt schneller als herkömmliche engmaschige Topologie Messungen geschehen. Da bei der Kontaktpfadtopologie wie in Fig. 3 ersichtlich alle Messstrecken im gleichen Punkt A starten und Punkt D enden, können die Messungen in beide Richtungen durchgefahren werden.

Entscheidender Vorteil der gemessenen Kontaktpfad-Topologie ist, dass Welligkeiten /Abweichungen direkt in Eingriffsrichtung des Getriebes erfasst werden - es wird nicht mehr aus einzelnen Punkten (klassische Topologie) ein Kontaktpfad abgeleitet, sondern eine durchgehende Linie gescannt, die alle Information hinsichtlich wirkender Welligkeiten direkt enthält.

## Patentansprüche

1. Verfahren zur Vermessung der Geometrie einer Schrägverzahnung, insbesondere einer Schrägverzahnung eines Zahnrads mit einer zylindrischen Makrogeometrie, bei welchem ein Sensor entlang mindestens eines Messpfades über eine Zahnflanke der Verzahnung geführt wird, um die Geometrie der Zahnflanke entlang des Messpfades an einer Mehrzahl von Punkten zu vermessen, **dadurch gekennzeichnet,**
**dass** sich der Messpfad zumindest in einem Teilbereich schräg über die Zahnflanke erstreckt, so dass er einen Eingriffsbereich auf der Zahnflanke über mindestens 50 % seiner Erstreckung in Profilrichtung und in Flankenlinienrichtung überstreicht.

2. Verfahren nach Anspruch 1, wobei der mindestens eine Messpfad einen ersten und einen zweiten Teilbereich aufweist, in welchem er sich schräg über die Zahnflanke erstreckt, wobei sich zwischen dem ersten und dem zweiten Teilbereich bevorzugt ein Abschnitt befindet, in welchem der mindestens eine Messpfad mit einem anderen Winkel als im ersten und/oder zweiten Teilbereich und/oder mit einem Winkel von maximal 20° und bevorzugt maximal 10° zur Profilrichtung oder zur Flankenlinienrichtung und bevorzugt in Profilrichtung oder in Flankenlinienrichtung verläuft,
und/oder
wobei sich der mindestens eine Messpfad von einem ersten Eckbereich des Eingriffsbereichs auf der Zahnflanke zur einem diagonal gegenüberliegenden Eckbereich des Eingriffsbereichs erstreckt, wobei die Eckbereiche bevorzugt eine Erstreckung von maximal 25 % der Höhe und der Breite des Eingriffsbereichs um die jeweilige Ecke umfassen, bevorzugt maximal 10 %, wobei sich der mindestens eine Messpfad weiter bevorzugt von der ersten Ecke des Eingriffsbereichs auf der Zahnflanke zur der diagonal gegenüberliegenden Ecke des Eingriffsbereichs erstreckt.

3. Verfahren nach einem der vorangegangenen Ansprüche, wobei die Position und/oder der Verlauf des mindestens einen Messpfades in Abhängigkeit von der Makrogeometrie der Verzahnung und/oder einer Getriebestufe aus der Verzahnung und einer Gegenverzahnung, insbesondere einem Gegenrad, bestimmt wird, insbesondere in Abhängigkeit von der Sprungüberdeckung, dem Eingriffsbereich, der Eingriffstrecke, der Verzahnungsbreite und/oder dem Grundschrägungswinkel.

4. Verfahren nach einem der vorangegangenen Ansprüche, wobei ein theoretischer Kontaktpfad mit einer Gegenverzahnung, insbesondere einem Gegenrad, bestimmt und der Verlauf des Messpfades auf Grundlage des Kontaktpfades bestimmt wird, und/oder wobei sich der mindestens eine Messpfad im wesentlichen entlang eines theoretischen Kontaktpfades mit einem Gegenrad erstreckt, wobei bevorzugt der Kontaktpfad mit einem Gegenrad durch den Verlauf eines Punktes der Berührlinien von Verzahnung und Gegenrad beim Abrollen aufeinander definiert ist, welcher die Berührlinien bezüglich ihrer Länge in einem vorgegebenen Verhältnis teilt, wobei der Kontaktpfad mit einem Gegenrad insbesondere durch den Verlauf des Mittelpunktes der Berührlinien definiert ist.

5. Verfahren nach einem der vorangegangenen Ansprüche, wobei die Zahnflanke entlang einer Mehrzahl von Messpfaden vermessen wird, welche sich zumindest in einem Teilbereich schräg über die Zahnflanke erstrecken und bevorzugt gemäß einem der Ansprüche 2 bis 5 verlaufen und/oder bestimmt werden, wobei bevorzugt mehrere Messpfade eingesetzt werden, welche sich jeweils entlang eines theoretischen Kontaktpfades mit einem Gegenrad erstecken, wobei die Kontaktpfade die Berührlinien bezüglich ihrer Länge jeweils in einem unterschiedlichen Verhältnis teilen, und/oder wobei alle Messpfade die gleichen Endpunkte aufweisen, wobei die Messungen bevorzugt in beide Richtungen durchgefahren werden.

6. Verfahren nach einem der vorangegangenen Ansprüche, wobei die Vermessung auf einer Verzahnungsmessmaschine erfolgt, welche eine Eingabefunktion aufweist, über welche die Position und/oder der Verlauf des mindestens einen Messpfades und/oder die Anzahl der Messpfade pro Zahnflanke vorgebbar ist.

7. Verfahren nach einem der vorangegangenen Ansprüche, wobei eine Mehrzahl von Zahnflanken der Verzahnung jeweils entlang mindestens eines Messpfads vermessen wird, welcher sich zumindest in einem Teilbereich schräg über die Zahnflanke erstreckt und bevorzugt gemäß einem der Ansprüche 2 bis 5 verläuft und/oder bestimmt wird.

8. Verfahren nach Anspruch 7, wobei die Mehrzahl von Zahnflanken jeweils entlang des gleichen Messpfades vermessen wird, insbesondere entlang eines Messpfads, welcher sich entlang eines theoretischen Kontaktpfades mit einem Gegenrad erstreckt, der durch den Verlauf des Mittelpunktes der Berührlinien zwischen Verzahnung und Gegenrad definiert ist.

9. Verfahren zur Analyse der Geometrie einer Schrägverzahnung, insbesondere Verfahren zur Welligkeits- und/oder Schwingungsanalyse der Geometrie einer Schrägverzahnung, wobei bevorzugt die Welligkeit entlang eines Pfades analysiert wird, beispielsweise durch eine Zerlegung der Welligkeit in unterschiedliche Frequenzen, und/oder durch Ermittlung eines Spektrums der Welligkeitsamplituden entlang des Pfades,
**dadurch gekennzeichnet,**
**dass** zur Analyse die Geometrie der Verzahnung entlang mindestens eines Pfades betrachtet wird, welcher sich zumindest in einem Teilbereich schräg über die Zahnflanke erstreckt und bevorzugt einen Eingriffsbereich auf der Zahnflanke über mindestens 50 % seiner Erstreckung in Profilrichtung und in Flankenlinienrichtung überstreicht.

10. Verfahren nach Anspruch 9, wobei der mindestens eine Pfad einen ersten und einen zweiten Teilbereich aufweist, in welchem er sich schräg über die Zahnflanke erstreckt, wobei zwischen dem ersten und dem zweiten Teilbereich bevorzugt ein Abschnitt befindet, in welchem der mindestens eine Pfad mit einem anderen Winkel als im ersten und/oder zweiten Teilbereich und/oder mit einem Winkel von maximal 20° und bevorzugt maximal 10° zur Profilrichtung oder zur Flankenlinienrichtung und bevorzugt in Profilrichtung oder in Flankenlinienrichtung verläuft, und/oder wobei der mindestens eine Pfad von einem ersten Eckbereich eines Eingriffsbereichs auf der Zahnflanke zur einem diagonal gegenüberliegenden Eckbereich des Eingriffsbereichs erstreckt, wobei die Eckbereiche bevorzugt eine Erstreckung von maximal 25 % der Höhe und der Breite des Eingriffsbereichs um die jeweilige Ecke umfassen, bevorzugt maximal 10 %, wobei sich der mindestens eine Pfad bevorzugt von einer ersten Ecke eines Eingriffsbereichs auf der Zahnflanke zur diagonal gegenüberliegenden Ecke des Eingriffsbereichs erstreckt.

11. Verfahren nach einem der Ansprüche 9 oder 10, wobei zur Analyse die Geometrie der Verzahnung vermessen wird, und die durch die Vermessung bestimmte Geometrie der Verzahnung analysiert wird, wobei bevorzugt zur Analyse die Geometrie der Verzahnung entlang mindestens eines Pfades betrachtet wird, entlang welchem die Verzahnung vermessen wurde, wobei die Verzahnung bevorzugt mit einem Verfahren gemäß einem der Ansprüche 1 bis 8 vermessen wird.

12. Verfahren nach einem der Ansprüche 9 bis 11, wobei für die Analyse die Geometrie einer Mehrzahl von Zahnflanken entlang eines Pfades über die jeweilige Zahnflanke gemäß der Teilung der Verzahnung überlagert wird, wobei bevorzugt eine Mehrzahl von Zahnflanken der Verzahnung entlang mindestens eines Messpfads vermessen und die entlang des jeweiligen Messpfads gemessene Geometrie der Zahnflanken für die Analyse gemäß der Teilung der Verzahnung überlagert wird.

13. Verfahren nach einem der vorangegangenen Ansprüche, wobei zur Analyse einer Getriebestufe beide Zahnräder vermessen und/oder analysiert werden, insbesondere entlang eines zentralen Kontaktpfades, und/oder wobei bei der Herstellung von Getriebestufen die beiden Zahnräder vermessen und/oder analysiert werden, wobei bevorzugt fehlerhafte Zahnräder und/oder Getriebestufen ersetzt und/oder aussortiert werden, wobei die Vermessung und/oder Analyse bevorzugt für alle hergestellten Getriebestufen erfolgt.

14. Verzahnungsmessmaschine, insbesondere in eine Verzahnbearbeitungsmaschine integrierte Verzahnungsmessmaschine, mit einer Werkstückaufnahme und einem Sensor, über welchen die Geometrie mindestens einer Zahnflanke einer Verzahnung eines in der Werkstückaufnahme aufgenommenen Werkstücks vermessbar ist, wobei die Verzahnungsmessmaschine eine oder mehrere Bewegungsachsen aufweist, über welche der Sensor entlang mindestens eines Messpfades über eine Zahnflanke der Verzahnung geführt werden kann, um die Geometrie der Zahnflanke entlang des Messpfades an einer Mehrzahl von Punkten zu vermessen, wobei die Verzahnungsmessmaschine eine Steuerung aufweist, welche eingerichtet ist, um ein Verfahren gemäß einem der Ansprüche 1 bis 13 durchzuführen.

15. Computerprogramm, umfassend Befehle, die bei der Ausführung des Programms durch die Steuerung einer Verzahnungsmessmaschine und/oder durch einen Computer diese/n veranlassen, ein Verfahren nach einem der Ansprüche 1 bis 13 auszuführen.
